# FASCICULE DE BREVET EUROPEEN

(11) **EP 1 230 693 B1**
(45) Date de publication et mention de la délivrance du brevet: **09.07.2003**
(21) Numéro de dépôt: 00962427.1
(22) Date de dépôt: 02.09.2000
(51) Int. Cl.: H01M 2/12

(54) **COUVERCLE POUR BATTERIE COMPORTANT UN SYSTEME DE VENTILATION**
BATTERIEDECKEL MIT LÜFTUNGSSYSTEM
BATTERY COVER COMPRISING A VENTILATION SYSTEM

(30) Priorité: 15.10.1999 LU 90461
(43) Date de publication de la demande: 14.08.2002
(73) Titulaire: Accumalux S.A., 1899 Kockelscheuer (LU)
(72) Inventeur: LANGE, Wolfgang, L-5823 Fentange (LU)
(74) Mandataire: Kihn, Pierre Emile Joseph
(86) Numéro de dépôt international: EP0008571
(87) Numéro de publication internationale: WO01029911

(56) Documents cités:
- EP-A- 0 189 543
- EP-A- 0 639 862
- EP-A- 0 834 935
- WO-A-95/15585
- DE-U- 9 411 503
- US-A- 3 772 088

## Description

La présente invention concerne un couvercle pour batterie.

Dans le document EP-A-0 639 862, on présente un bac de batterie multicellulaire recouvert par un couvercle dans lequel est incorporé un collecteur de gaz. Ce dernier est rectiligne est s'étend entre deux parois latérales opposées du couvercle. Le collecteur de gaz communique avec l'intérieur de chaque cellule pour la collecte de gaz créés par l'activité chimique de la batterie. Il débouche à ses deux extrémités à chaque fois dans un canal latéral, perpendiculaire au collecteur de gaz, agencé dans une paroi latérale du couvercle. Le canal latéral est muni d'une chicane pour la séparation de condensats et de gouttes provoquée par le changement de direction des gaz à la jonction entre le collecteur de gaz et le canal latéral. Chaque canal latéral communique avec une cavité située latéralement par rapport au collecteur de gaz. Dans la cavité est logée une pièce insérée qui recouvre la cavité. La pièce insérée porte une fritte poreuse oblique et est munie d'un évent en aval de la fritte poreuse. A l'arrière de la cavité se trouve une chambre de fritte située sous la fritte poreuse. A l'avant de la cavité, devant la chambre de fritte, se trouve un réservoir collecteur dans lequel débouche le canal latéral et qui s'ouvre sur la chambre de fritte. Ainsi, tous les gaz passent du canal latéral dans le réservoir collecteur et la chambre de fritte, puis à travers la fritte poreuse et l'évent pour rejoindre le milieu extérieur. L'humidité et les gouttes d'électrolyte séparées dans le canal et la chambre de fritte sont collectées dans le réservoir collecteur. La disposition du réservoir collecteur en avant de la cavité, alors que la fritte se trouve en arrière, permet d'éviter que la fritte ne soit au dessus de l'acide récolté dans ce dernier. Toutefois, si la batterie est secouée, l'acide contenu dans le réservoir de collecte est projeté contre la fritte, à travers la chambre de collecte. De plus, en cas d'inclinaison de la batterie, l'acide pénètre immédiatement dans la chambre de fritte qui est contiguë au réservoir collecteur et contacte la fritte, ce qui provoque rapidement un épanchement de l'acide récolté vers l'extérieur. Par ailleurs, la chicane employée pour compléter la séparation de l'humidité des gaz est peu efficace, et une trop grande partie de cette humidité atteint la fritte. Ceci entraîne un colmatage de la fritte et augmente les risques d'explosion de la batterie. Enfin, aucune précaution n'a été prise pour limiter l'épanchement d'acide à l'extérieur de la batterie en cas de renversement.

L'objet de la présente invention est dès lors de proposer un couvercle pour batterie pouvant évacuer les gaz créés par l'activité chimique de la batterie, et qui permette une meilleure protection de la fritte contre l'acide ainsi qu'une limitation de l'épanchement d'acide à l'extérieur de la batterie en cas de renversement. Conformément à l'invention, cet objectif est atteint par un couvercle de batterie selon la revendication 1.

Un couvercle pour batterie selon l'invention comprend un collecteur de gaz incorporé, pour communiquer avec l'intérieur d'au moins une cellule d'un bac de batterie, qui s'étend jusqu'à une des parois latérales du couvercle. Une cavité, dans la paroi latérale du couvercle, est décalée latéralement par rapport au collecteur de gaz. Un canal latéral, dans la paroi latérale, relie le collecteur de gaz à la cavité. Une plaque pourvue d'un évent recouvre la cavité. Une pastille frittée est logée dans la cavité et est disposée de manière à ce que tous les gaz passent à travers la pastille frittée puis l'évent vers le milieu extérieur. Selon un aspect important de l'invention le collecteur de gaz débouche dans une chambre intermédiaire située dans le canal latéral, le fond de la chambre intermédiaire servant de collecteur d'électrolyte. Un orifice de passage, dans une paroi de la chambre intermédiaire, permet le passage des gaz dans le canal latéral, cet orifice de passage n'étant pas orienté vers la cavité.

Les gaz créés par les réactions chimiques dans la batterie et collectés par le collecteur de gaz sont donc amenés à la chambre intermédiaire. L'humidité de ces gaz, c'est-à-dire l'électrolyte entraîné, se dépose sur les parois de la chambre intermédiaire sous forme de condensats et gouttelettes qui s'écoulent dans le fond de la chambre intermédiaire. Les gaz substantiellement asséchés traversent alors l'orifice de passage pour frapper une paroi du canal latéral avant de s'écouler en direction de la cavité, puisque les gaz ne peuvent pas sortir directement vers la cavité. Tous les gaz passent ensuite à travers la pastille frittée puis l'évent vers le milieu extérieur, la pastille frittée empêchant, le cas échéant, le retour de flammes vers l'intérieur de la batterie. La présence de la chambre intermédiaire devant le collecteur de gaz simplifie le retour de l'électrolyte collecté dans la chambre intermédiaire vers l'intérieur de la batterie. Grâce à l'orifice de passage qui n'est pas orienté vers la cavité, les gaz ont un cheminement long et complexe avant d'atteindre la cavité, ce qui augmente la séparation de l'humidité des gaz. De plus, il n'est pas possible que l'électrolyte accumulé dans la chambre intermédiaire, qui fait office de réservoir collecteur, soit projeté vers la pastille frittée depuis la chambre intermédiaire. En fait, si la batterie est secouée dans la direction de la pastille frittée, l'électrolyte ne peut pas s'échapper de la chambre intermédiaire. La pastille frittée est donc protégée contre des projections d'acide. En cas de renversement, l'écoulement d'électrolyte doit suivre le même cheminement complexe que les gaz. L'électrolyte ne peut pas s'écouler directement du canal collecteur dans la cavité, ce qui limite l'épanchement d'électrolyte à l'extérieur de la batterie.

De préférence, la chambre intermédiaire a sensiblement une forme de parallélépipède rectangle, le collecteur de gaz débouchant dans la partie supérieure de la chambre intermédiaire. De plus, l'orifice de passage peut être une fente sensiblement horizontale située dans une paroi de la chambre intermédiaire opposée à la cavité, juste sous une arête supérieure. Les gaz subissent en conséquence de forts changements de direction puisqu'ils doivent d'abord tourner pour pénétrer dans le canal latéral à travers la fente horizontale, puis ils sont inversés contre l'extrémité fermée du canal latéral, opposée à l'extrémité débouchant dans la cavité, pour repartir vers la cavité. Ces changements de direction des gaz améliorent encore la séparation de l'humidité.

Avantageusement, les parois de la chambre intermédiaire s'élèvent au delà du bord inférieur du collecteur de gaz. Ainsi, lorsque le niveau d'électrolyte dans la chambre intermédiaire dépasse le bord inférieur du collecteur de gaz, le retour de l'électrolyte vers l'intérieur de la batterie se fait spontanément.

Selon un mode de réalisation avantageux, deux cloisons sensiblement verticales munies chacune d'une fente sensiblement horizontale, à des hauteurs différentes, sont installées dans le canal latéral en aval de la chambre intermédiaire. On forme ainsi quatre chambres de séparation et de collecte successives, du collecteur de gaz jusqu'à la pastille frittée : (1) la chambre intermédiaire, (2) de l'extrémité fermée du canal jusqu'à la première cloison verticale, (3) entre les deux cloisons verticales, et (4) de la deuxième cloison verticale à la pastille frittée.

De préférence, la plaque présente un support de pastille frittée qui pénètre à l'intérieur de la cavité, la pastille frittée étant logée sensiblement verticalement dans ce support de pastille frittée. L'évent est situé devant ce support de pastille frittée. Ceci facilite la production du couvercle par moulage par injection. Pour la même raison, le canal peut être formé par une rainure dans la paroi latérale du couvercle qui est recouverte par la plaque, une fois que celle-ci est en place. On peut donc former en même temps que le couvercle la chambre intermédiaire et les cloisons, puis simplement recouvrir le canal latéral et la cavité en fixant la plaque.

Avantageusement, le bas de l'orifice de passage, le centre du collecteur de gaz et le centre de la pastille frittée sont dans un même plan horizontal. Cette disposition favorise le retour de l'électrolyte accumulé vers l'intérieur de la batterie. En effet, lorsque le niveau d'électrolyte présent dans le canal latéral dépasse ce plan, l'électrolyte accumulé dans le canal latéral peut pénétrer dans la chambre intermédiaire et retourner à l'intérieur de la batterie. Ce phénomène se produit spontanément et permet de conserver toujours au moins la moitié de la pastille frittée libre pour l'évacuation des gaz.

Selon un mode de réalisation préféré, le collecteur de gaz est rectiligne et relie des bouchons installés dans le couvercle, le collecteur de gaz s'étendant jusqu'à deux parois opposées du couvercle et débouchant à chaque fois dans une chambre intermédiaire comprenant un orifice de passage pour le passage des gaz dans un canal latéral.

D'autres particularités et caractéristiques de l'invention ressortiront de la description détaillée d'un mode de réalisation avantageux présenté ci-dessous, à titre d'illustration, en se référant aux dessins annexés. Ceux-ci montrent:
- Fig.1:: une vue de face d'un couvercle pour batterie selon l'invention ;
- Fig.2:: une vue de dessous de la Fig.1 en coupe A-A ;
- Fig.3:: une vue de face en coupe B-B du couvercle de la Fig.1;
- Fig.4:: une vue du dessous en coupe C-C Fig.5 ;
- Fig.5:: une vue arrière d'une plaque.

Sur les figures, les mêmes références désignent des éléments identiques ou similaires.

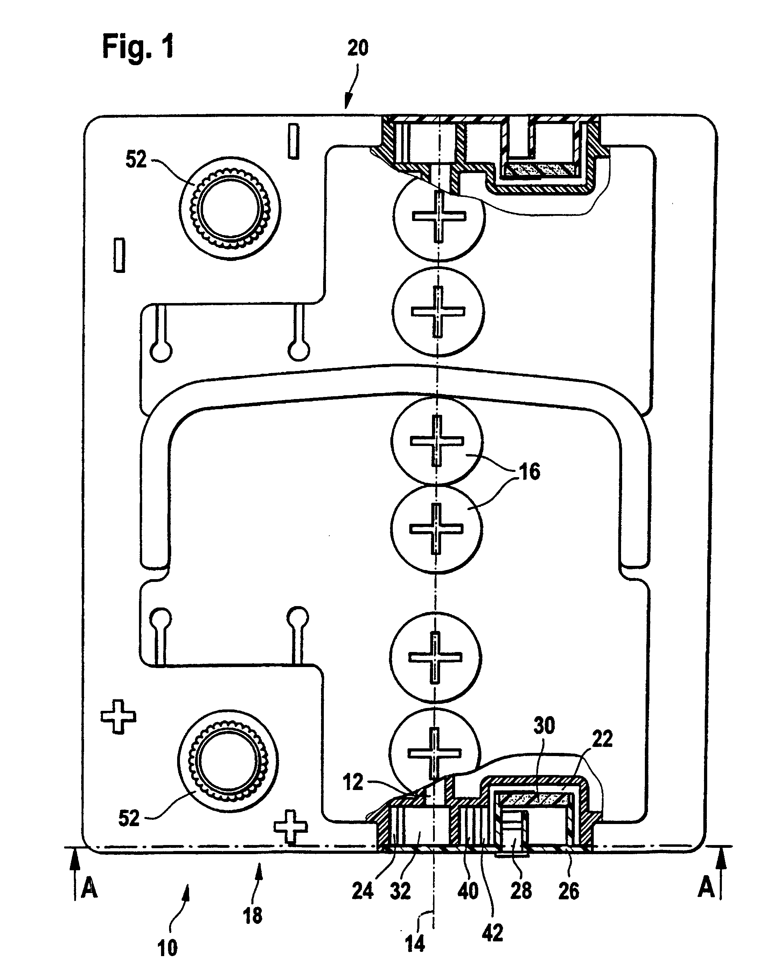

Sur la Fig.1 est illustré une vue de face d'un mode de réalisation préféré d'un couvercle 10 pour batterie selon l'invention. Deux zones découpées laissent apparaître la structure interne du couvercle 10. Comme on le voit, un collecteur de gaz 12, aligné selon un axe 14 passant par le centre de bouchons 16, est incorporé dans le couvercle 10. Le collecteur de gaz 12, qui s'étend jusqu'aux deux parois latérales 18 et 20 opposées du couvercle 10, relie entre eux les bouchons 16 et permet ainsi la communication avec l'intérieur des cellules d'un bac de batterie multicellulaire.

Pour alléger la description, on décrira seulement la structure du couvercle 10 au niveau de la paroi latérale 18 située en bas de la Fig.1 ; toutefois, les structures aux deux extrémités du collecteur de gaz 12, c'est-à-dire dans les deux parois latérales 18 et 20, sont identiques. Dans la paroi latérale 18 se trouve une cavité 22, laquelle est décalée latéralement par rapport au collecteur de gaz 12. Un canal latéral 24, également dans la paroi latérale 18 et perpendiculaire au collecteur de gaz 12, relie ce dernier à la cavité 22. Une plaque 26 munie d'un évent 28 recouvre la cavité 22. Au fond de la cavité 22 est logée verticalement une pastille frittée 30 poreuse qui est disposée de manière à ce que tous les gaz arrivant dans la cavité 22 la traversent avant de s'échapper à travers l'évent 28 vers le milieu extérieur. La pression à l'intérieur de la batterie peut donc être réduite et la batterie est protégée contre les retours de flammes.

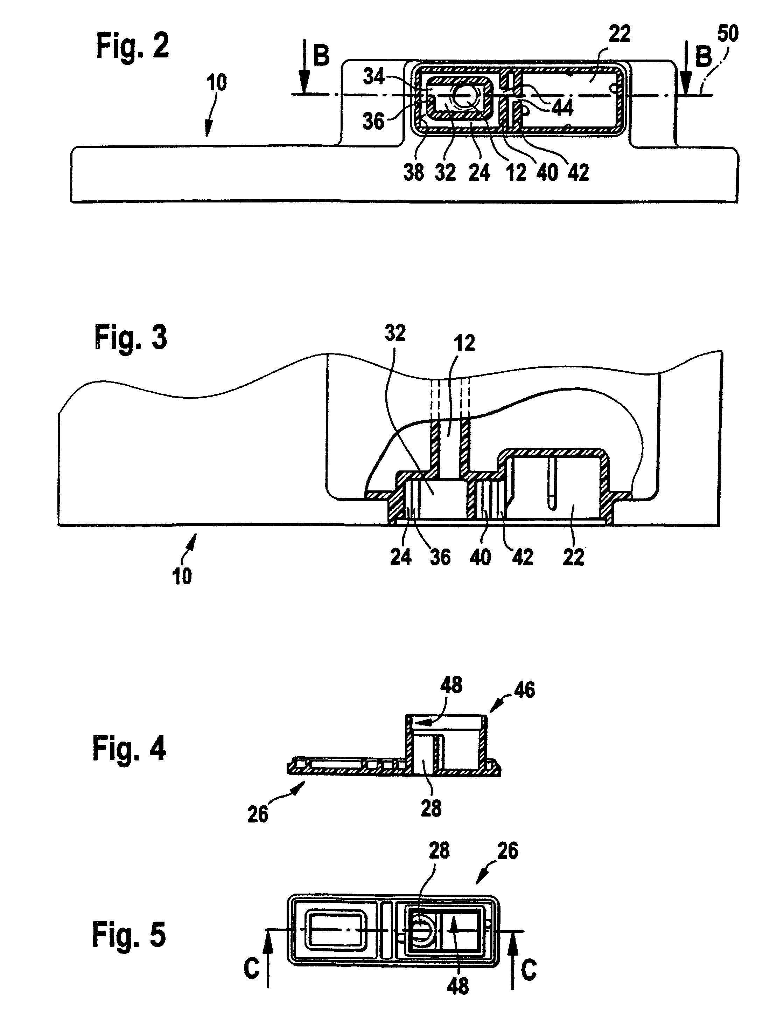

Il sera apprécié que le collecteur de gaz 12 débouche dans une chambre intermédiaire 32, située dans le canal latéral 24. Sur la Fig.2, qui montre une vue de dessous en coupe A-A du couvercle 10 de la Fig.1, on identifie plus facilement cette chambre intermédiaire 32 sensiblement en forme de parallélépipède rectangle. Un orifice de passage 34 en forme de fente horizontale est agencé dans la paroi 36 de la chambre intermédiaire 32 opposée à la cavité 22, de préférence sous le coin supérieur. Ainsi, lorsque les gaz débouchent du collecteur de gaz 12 dans la partie supérieure de la chambre intermédiaire 32, on provoque un changement de direction à 90°, pour leur passage dans le canal latéral 24 à travers l'orifice de passage 34. Ce brusque changement de direction provoque le dépôt de condensats et de gouttelettes d'électrolyte amenés par les gaz sur les parois de la chambre intermédiaire 32, qui s'accumulent dans le fond de celle-ci. Le retour d'électrolyte vers l'intérieur de la batterie est favorisé par la forme de la chambre intermédiaire 32 dont les parois s'élèvent au delà du bord inférieur du collecteur de gaz 12. L'électrolyte accumulé retourne donc spontanément dans le collecteur de gaz 12 quand le niveau d'électrolyte dans la chambre intermédiaire 32 dépasse le bord inférieur du collecteur de gaz 12. Après la sortie de l'orifice de passage 34, les gaz subissent un deuxième changement de direction contre l'extrémité fermée 38 du canal latéral 24, l'autre extrémité du canal latéral 24 débouchant dans la cavité 22. Les gaz sont donc inversés contre cette extrémité fermée 38 et s'écoulent ensuite vers la cavité 22, inversion qui favorise le dépôt d'humidité. Ce double changement de direction permet une séparation efficace de l'humidité des gaz. Par ailleurs, en cas d'inclinaison de la batterie vers la pastille frittée 30, il est clair que l'électrolyte accumulé dans la chambre intermédiaire 32 ne peut pas être projeté sur la pastille frittée 30, puisqu'il n'existe pas d'orifice de passage de ce côté de la chambre intermédiaire 32. En inclinant la batterie dans l'autre sens, l'électrolyte s'écoule dans le canal latéral 24, vers l'extrémité fermée 38. Il est clair qu'en cas de renversement de la batterie, l'épanchement d'électrolyte est limité car l'électrolyte doit suivre le même chemin que les gaz.

Sur la Fig.2 on aperçoit également deux cloisons verticales 40 et 42 placées l'une derrière l'autre dans le canal latéral 24, entre la chambre intermédiaire 32 et la cavité 22. Ces deux cloisons 40 et 42 possèdent chacune une fente horizontale 44, mais à des hauteurs différentes. On forme ainsi quatre chambres de séparation et de collecte successives entre le collecteur de gaz 12 et la pastille frittée 30 : (1) la chambre intermédiaire 32, (2) de l'extrémité fermée 38 du canal latéral 24 à la première cloison 40, (3) entre les deux cloisons 40 et 42, et (4) de la deuxième cloison 42 à la pastille frittée 30. L'agencement de ces quatre chambres de séparation et de collecte succesives provoque de nombreux changement de direction des gaz, améliorant ainsi la séparation de l'humidité des gaz et sa retenue avant la pastille frittée 30.

On remarquera d'après les Fig.1 à 3 que la plaque 26, montrée en vue arrière sur la Fig.5, ne couvre pas uniquement la cavité 22 mais également le canal latéral 24. Lors de la fabrication du couvercle 10, qui se fait en général par moulage par injection, on peut alors former en même temps le canal latéral 24, qui est ici une rainure dans la paroi latérale 18, la cavité 22, la chambre intermédiaire 32 et les cloisons verticales 40 et 42. On obtient un couvercle 10 tel que représenté sur la Fig.3, qui montre une vue de dessous du couvercle 10 de la Fig.1 en coupe B-B.

La Fig.4 montre une vue en coupe C-C de la plaque 26 de la Fig.5. On remarquera la présence d'un support de pastille frittée 46 qui pénètre dans la cavité 22 lorsque la plaque 26 est fixée au couvercle 10. L'évent 28 est agencé en avant du support de pastille frittée 46. Au fond du support de pastille frittée 46 se trouve un cadre vertical 48 destiné à supporter la pastille frittée 30. Au vu des Fig.2 et 5, il apparaît clairement que la pastille frittée 30 est sensiblement centrée dans la cavité 22.

Sur la Fig.2, le signe de référence 50 indique un plan horizontal, donc parallèle à la surface de l'électrolyte, qui comprend le bas de la fente horizontale formant l'orifice de passage 34 de la chambre intermédiaire 32, l'axe du collecteur de gaz 12 et le centre de la pastille frittée 30, vu l'agencement de la pastille frittée 30 dans la cavité 22. On notera aussi que le bas des fentes horizontales 44 des cloisons verticales 40 et 42 n'est pas situé au dessus de ce plan 50. En conséquence, dès que le niveau d'électrolyte accumulé dans les quatre chambres de séparation et de collecte dépasse le niveau du plan 50, l'électrolyte peut passer spontanément d'une chambre à l'autre et retourner vers l'intérieur de la batterie. C'est pourquoi, la moitié supérieure de la pastille frittée 30 est toujours libre pour l'évacuation des gaz.

Reste à noter que la cavité 22 et le canal latéral 24 sont disposés de manière à s'éloigner des pôles 52 de la batterie, ce qui permet d'éloigner la sortie des gaz, c'est-à-dire l'évent 28, des pôles 52.

## Revendications

1. Couvercle pour batterie comprenant :
un collecteur de gaz (12) incorporé dans le couvercle (10) pour communiquer avec l'intérieur d'au moins une cellule d'un bac de batterie et s'étendant jusqu'à une des parois latérales (18) du couvercle (10) ;
une cavité (22) dans la paroi latérale (18), décalée latéralement par rapport au collecteur de gaz (12) ;
un canal latéral (24), dans la paroi latérale (18), reliant le collecteur de gaz (12) à la cavité (22) ;
une plaque (26) recouvrant la cavité (22), la plaque (26) étant pourvue d'un évent (28) ; et
une pastille frittée (30) logée dans la cavité (22) et disposée de manière à ce que tous les gaz passent à travers la pastille frittée (30) puis l'évent (28) vers le milieu extérieur ;
**caractérisé par**
une chambre intermédiaire (32) située dans le canal latéral (24) et dans laquelle débouche le collecteur de gaz (12), le fond de la chambre intermédiaire (32) servant de collecteur d'électrolyte ; et
un orifice de passage (34) dans une paroi (36) de la chambre intermédiaire (32) pour le passage des gaz dans le canal latéral (24), cet orifice de passage (34) n'étant pas orienté vers la cavité (22).

2. Couvercle selon la revendication 1, **caractérisé en ce que** la chambre intermédiaire (32) a sensiblement une forme de parallélépipède rectangle, le collecteur de gaz (12) débouchant dans la partie supérieure de la chambre intermédiaire (32) et l'orifice de passage (34) étant une fente sensiblement horizontale située dans une paroi (36) opposée à la cavité (22), juste sous une arête supérieure.

3. Couvercle selon la revendication 1 ou 2, **caractérisé en ce que** les parois de la chambre intermédiaire (32) s'élèvent au delà du bord inférieur du collecteur de gaz (12) de manière à favoriser le retour d'électrolyte vers l'intérieur de la batterie.

4. Couvercle selon la revendication 1, 2 ou 3, **caractérisé par** deux cloisons (40, 42) sensiblement verticales munies chacune d'une fente (44) sensiblement horizontale, à des hauteurs différentes, les cloisons verticales (40, 42) étant installées dans le canal latéral (24) en aval de la chambre intermédiaire (32).

5. Couvercle selon l'une quelconque des revendications précédentes, **caractérisé en ce que** la plaque (26) présente un support de pastille frittée (46) qui pénètre à l'intérieur de la cavité (22), la pastille frittée (30) étant logée sensiblement verticalement dans ce support de pastille frittée (46) ; et **en ce que** l'évent (28) est situé devant le support de pastille frittée (46).

6. Couvercle selon l'une quelconque des revendications précédentes, **caractérisé en ce que** le canal latéral (24) est formé par une rainure, dans la paroi latérale (18) du couvercle, recouverte par la plaque (26).

7. Couvercle selon l'une quelconque des revendications précédentes, **caractérisé en ce que** le bas de l'orifice de passage (34), le centre du collecteur de gaz (12) et le centre de la pastille frittée (30) sont dans un même plan horizontal (50).

8. Couvercle selon l'une quelconque des revendications précédentes, **caractérisé en ce que** le collecteur de gaz (12) est rectiligne et relie des bouchons (16) installés dans le couvercle (10), le collecteur de gaz (12) s'étendant jusqu'à deux parois opposées (18, 20) du couvercle (10) et débouchant à chaque fois dans une chambre intermédiaire (32) comprenant un orifice de passage (34) pour le passage des gaz dans un canal latéral (24).

9. Batterie comprenant un couvercle selon l'une quelconque des revendications précédentes.

## Patentansprüche

1. Batteriedeckel mit
einem im Deckel (10) integrierten Gaskollektor (12) zur Herstellung einer Verbindung mit dem Inneren zumindest einer Zelle in einem Batteriekasten, wobei der Gaskollektor sich bis zu einer der Seitenwände (18) des Deckels (10) erstreckt;
einer zum Gaskollektor (12) seitlich versetzten Vertiefung (22) in der Seitenwand (18);
einem den Gaskollektor (12) mit der Vertiefung (22) verbindenden Seitenkanal (24) in der Seitenwand (18);
einer die Vertiefung (22) abdeckenden Platte (26) mit einer Entgasungsöffnung (28) und
einem Frittenkörper (30), welcher in die Vertiefung (22) eingesetzt und so angeordnet ist, dass alle Gase durch den Frittenkörper (30) und anschließend durch die Entgasungsöffnung (28) ins Freie strömen,
**gekennzeichnet durch**
eine im Seitenkanal (24) angeordnete Zwischenkammer (32), in welche der Gaskollektor (12) mündet, wobei der Boden der Zwischenkammer (32) als Elektrolytkollektor dient und
eine Durchtrittsöffnung (34), welche in einer Wand (36) der Zwischenkammer (32) für die Durchströmung der Gase in den Seitenkanal (24) angeordnet ist, wobei diese Durchtrittsöffnung (34) nicht zur Vertiefung (22) orientiert ist.

2. Deckel nach Anspruch 1, **dadurch gekennzeichnet, dass** die Zwischenkammer (32) annähernd quaderförmig ausgebildet ist, wobei der Gaskollektor (12) in den oberen Abschnitt der Zwischenkammer (32) mündet und die Durchtrittsöffnung (34) als weitestgehend horizontaler Schlitz in einer der Vertiefung (22) entgegengesetzten Wand (36) genau unter einer oberen Kante ausgebildet ist.

3. Deckel nach Anspruch 1 oder 2, **dadurch gekennzeichnet, dass** die Wände der Zwischenkammer (32) über den unteren Rand des Gaskollektors (12) ragen, so dass der Elektrolytrücklauf ins Innere der Batterie begünstigt wird.

4. Deckel nach einem der Ansprüche 1, 2 oder 3, **gekennzeichnet durch** zwei weitestgehend vertikale Zwischenwände (40, 42), welche jeweils mit einem weitestgehend waagerechten, jeweils auf unterschiedlicher Höhe angebrachten Schlitz (44) versehen sind, wobei die Zwischenwände (40, 42) sich im Seitenkanal (24) nach der Zwischenkammer (32) angeordnet sind.

5. Deckel nach einem beliebigen der vorhergehenden Ansprüche, **dadurch gekennzeichnet, dass** die Platte (26) einen Frittenkörper-Träger (46) aufweist, welcher ins Innere der Vertiefung (22) hineinragt, wobei der Frittenkörper (30) weitestgehend vertikal in den Frittenkörper-Träger (46) eingesetzt ist und dass die Entgasungsöffnung (28) sich vor dem Frittenkörper-Träger (46) befindet.

6. Deckel nach einem beliebigen der vorhergehenden Ansprüche, **dadurch gekennzeichnet, dass** der Seitenkanal (24) durch eine von der Platte (26) abgedeckten Kehle in der Seitenwand (18) des Deckels gebildet ist.

7. Deckel nach einem beliebigen der vorhergehenden Ansprüche, **dadurch gekennzeichnet, dass** der untere Abschnitt der Durchtrittsöffnung (34), das Zentrum des Gaskollektors (12) und das Zentrum des Frittenkörpers (30) sich in ein und derselben horizontalen Ebene (50) befinden.

8. Deckel nach einem beliebigen der vorhergehenden Ansprüche, **dadurch gekennzeichnet, dass** der Gaskollektor (12) geradlinig ausgebildet ist und im Deckel (10) angeordnete Stopfen (19) verbindet, wobei der Gaskollektor (12) sich bis zu zwei entgegengesetzten Wänden (18, 20) des Deckels (10) erstreckt und jeweils in eine Zwischenkammer (32) mit einer Durchtrittsöffnung (34) für die Durchströmung der Gase in einen Seitenkanal (24) mündet.

9. Batterie mit einem Deckel nach einem beliebigen der vorhergehenden Ansprüche.

## Claims

1. Lid for battery comprising:
a gas collector (12) incorporated in the lid (10) in order to communicate with the inside of at least one cell of a battery container and extending to one of the side walls (18) of the lid (10);
a cavity (22) in the side wall (18), offset sideways with respect to the gas collector (12);
a side channel (24), in the side wall (18), linking the gas collector (12) to the cavity (22);
a plate (26) covering the cavity (22), the plate (26) being provided with a vent (28); and
a sintered pellet (30) housed in the cavity (22) and placed so that all the gases pass through the sintered pellet (30) then the vent (28) to the outside;
**characterized by**
an intermediate chamber (32) located in the side channel (24) and in which the gas collector (12) emerges, the bottom of the intermediate chamber (32) serving as an electrolyte collector; and
a through-orifice (34) in a wall (36) of the intermediate chamber (32) for the passage of gases in the side channel (24), this through-orifice (34) not being oriented towards the cavity (22).

2. Lid according to Claim 1, **characterized in that** the intermediate chamber (32) is of substantially rectangular parallelepipedal shape, the gas collector (12) emerging in the upper part of the intermediate chamber (32) and the through-orifice (34) being a substantially horizontal slot located in a wall (36) opposite the cavity (22), just under an upper edge.

3. Lid according to Claim 1 or 2, **characterized in that** the walls of the intermediate chamber (32) rise beyond the lower edge of the gas collector (12) so as to promote the return of electrolyte into the battery.

4. Lid according to Claim 1, 2 or 3, **characterized by** two substantially vertical partitions (40, 42), each one provided with a substantially horizontal slot (44) at different heights, the vertical partitions (40, 42) being fitted into the side channel (24) downstream of the intermediate chamber (32).

5. Lid according to any one of the preceding claims, **characterized in that** the plate (26) has a sintered pellet support (46) which enters the cavity (22), the sintered pellet (30) being housed substantially vertically in this sintered pellet support (46); and **in that** the vent (28) is located in front of the sintered pellet support (46).

6. Lid according to any one of the preceding claims, **characterized in that** the side channel (24) is formed by a groove, in the side wall (18) of the lid, covered by the plate (26).

7. Lid according to any one of the preceding claims, **characterized in that** the bottom of the through-orifice (34), the centre of the gas collector (12) and the centre of the sintered pellet (30) are in the same horizontal plane (50).

8. Lid according to any one of the preceding claims, **characterized in that** the gas collector (12) is straight and connects plugs (16) fitted in the lid (10), the gas collector (12) extending to two opposite walls (18, 20) of the lid (10) and emerging on each occasion in an intermediate chamber (32) comprising a through-orifice (34) for the passage of gases into a side channel (24).

9. Battery comprising a lid according to any one of the preceding claims.
